# EUROPÄISCHE PATENTANMELDUNG

(11) **EP 0 597 294 A1**
(43) Veröffentlichungstag der Anmeldung: **18.05.1994**
(21) Anmeldenummer: 93117045.0
(22) Anmeldetag: 21.10.1993
(51) Int. Cl.: C08G 77/08, C08G 77/10

(54) **Verfahren zur Herstellung von Methylpolysiloxanen**

(30) Priorität: 23.10.1992 DE 4235877
(71) Anmelder: WACKER-CHEMIE GMBH, D-81737 München (DE)
(72) Erfinder: Burkhardt, Jürgen, Dr., D-84543 Winhöring (DE); Böck, Andreas, D-84547 Emmerting (DE); Pressl, Alfred, D-84533 Marktl (DE)

(57) **Zusammenfassung**

Verfahren zur Herstellung von Methylpolysiloxanen durch Umsetzung von Organopolysiloxanen (A) aus Einheiten der Formel

Rₐ(CH₃)_{b}(R¹O)_{c}SiO_{(4-a-b-c)/2} (I),

worin
R, R¹, a, b und c die in Anspruch 1 angegebene Bedeutung haben,
mit Hexamethyldisiloxan in Anwesenheit von konzentrierter Schwefelsäure und aluminiumhaltigem Silikat.

## Beschreibung

Die Erfindung betrifft ein Verfahren zur Herstellung von linearen, verzweigten und cyclischen Methylpolysiloxanen. Die Bezeichnung Methylpolysiloxane soll dabei Methylsiloxane mit einer beliebigen Anzahl von Siloxan-Einheiten umfassen.

Maßnahmen zum Umweltschutz zwingen in zunehmendem Maße zur Verwertung von Abfall. Eine Möglichkeit, organopolysiloxanhaltigen Abfall aufzuarbeiten, wird in DE-AS 1 095 830 (Imperial Chemical Industries Ltd.; ausgegeben am 29. Dezember 1960) bzw. der entsprechenden US 2,934,550 beschrieben, wobei cyclische Dimethylpolysiloxane durch Erhitzen eines Gemisches aus Organopolysiloxan und einem Aluminium- oder Phosphorhalogenid unter wasserfreien Bedingungen auf mindestens 250°C und gleichzeitigem Abdestillieren der gebildeten Cyclen hergestellt werden. In GB 752 860 (Midland Silicones Ltd.; ausgegeben am 18. Juli 1956) ist ein Verfahren zur Verwertung von Organopolysiloxanen offenbart, bei dem die Organopolysiloxane mit einer Lösung von wasserfreiem Chlorwasserstoff in gegebenenfalls chloriertem Kohlenwasserstoff behandelt werden. Des weiteren wird in DE-OS 28 39 652 (Wacker-Chemie GmbH; ausgegeben am 20. März 1980) bzw. der entsprechenden US 4,276,425 ein Verfahren zur Herstellung von cyclischen Dimethylpolysiloxanen beschrieben, wobei lineares oder verzweigtes Organopolysiloxan mit wäßriger Schwefelsäure unter gleichzeitigem Abdestillieren der gebildeten Cyclen umgesetzt wird.

Gegenstand der vorliegenden Erfindung ist ein Verfahren zur Herstellung von Methylpolysiloxanen durch Umsetzung von Organopolysiloxanen (A) aus Einheiten der Formel

Rₐ(CH₃)_{b}(R¹O)_{c}SiO_{(4-a-b-c)/2} (I),

worin
- R: gleich oder verschieden sein kann und Wasserstoffatom, gegebenenfalls substituierte aromatische Kohlenwasserstoffreste oder gegebenenfalls substituierte aliphatisch ungesättigte Reste bedeutet,
- R¹: Wasserstoffatom oder Alkylrest bedeutet,
- a: 0, 1, 2 oder 3, bevorzugt 0, 1 oder 2, insbesondere 0 oder 1,
- b: 0, 1, 2 oder 3, bevorzugt 1, 2 oder 3, insbesondere 2, und
- c: 0 oder 1, bevorzugt 0, ist,
mit der Maßgabe, daß die Summe a+b+c kleiner oder gleich 3 ist,
mit Hexamethyldisiloxan in Anwesenheit von konzentrierter Schwefelsäure und aluminiumhaltigem Silikat.

Bei Rest R handelt es sich vorzugsweise um Wasserstoffatom, Vinyl-, Allyl-, n-Hexenyl- und Phenylreste, besonders bevorzugt um Wasserstoffatom, Vinyl- und Phenylreste.

Bei Rest R¹ handelt es sich besonders bevorzugt um Wasserstoffatom.

Bei der erfindungsgemäß eingesetzten Schwefelsäure handelt es sich vorzugsweise um 96 bis 100 gewichtsprozentige Schwefelsäure.

Bei dem erfindungsgemäßen Verfahren wird Schwefelsäure vorzugsweise in Mengen bis 10 Gewichtsprozent, besonders bevorzugt in Mengen von 0,5 bis 5,0 Gewichtsprozent, jeweils bezogen auf das Gesamtgewicht an Organopolysiloxan (A), eingesetzt.

Bei dem erfindungsgemäß eingesetzten aluminiumhaltigen Silikat handelt es sich vorzugsweise um Aluminiumsilikate, wie Ton und Bleicherden, wobei Bleicherden, insbesondere säureaktivierte Bleicherden, besonders bevorzugt sind.

Bei dem erfindungsgemäßen Verfahren wird aluminiumhaltiges Silicat vorzugsweise in Mengen bis 10 Gewichtsprozent, besonders bevorzugt in Mengen von 0,5 bis 5,0 Gewichtsprozent, jeweils bezogen auf das Gesamtgewicht an Organopolysiloxan (A), eingesetzt.

Bei dem erfindungsgemäßen Verfahren wird Hexamethyldisiloxan vorzugsweise in Mengen bis 25 Gewichtsprozent, besonders bevorzugt in Mengen von 1,0 bis 10 Gewichtsprozent, jeweils bezogen auf das Gesamtgewicht an Organopolysiloxan (A), eingesetzt.

Als Organopolysiloxane (A) können beliebige Organopolysiloxane, wie beispielsweise lineare, verzweigte, vernetzte oder cyclische Siloxane, eingesetzt werden.

Bei Organopolysiloxan (A) kann es sich auch um Gemische von Organopolysiloxanen mit anderen Stoffen handeln. So können als erfindungesgemäß eingesetzte Organopolysiloxane (A) beispielsweise auch zu Elastomeren vernetzbare, teilweise oder vollständig vernetzte Massen, die zusätzlich zu Organopolysiloxan übliche Hilfsstoffe, wie Füllstoffe, Pigmente und Vernetzungskatalysator, enthalten, oder aber Öle, die z.B. zusätzlich zu Organopolysiloxan weitere Stoffe, wie etwa Paraffinwachs, enthalten, verwendet werden.

Falls die erfindungsgemäß eingesetzten Organopolysiloxane (A) Si-gebundene Reste R der obengenannten Bedeutung aufweisen, so werden diese bei dem erfindungsgemäßen Verfahren nach dem Schema

Rₐ(CH₃)_{b}(R¹O)_{c}SiO_{(4-a-b-c)/2} + a/2 H₂O ---->

(CH₃)_{b}(R¹O)_{c}SiO_{(4-b-c)/2} + a RH,

wobei R, R¹, a, b und c eine der obengenannten Bedeutungen haben, abgespalten und vorzugsweise durch Verdampfen aus dem Reaktionsgemisch entfernt.

Vorzugsweise werden als Organopolysiloxane (A) solche eingesetzt, aus denen nach dem erfindungsgemäßen Verfahren Methylpolysiloxane mit maximal 10 % (CH₃)SiO_{3/2}-Einheiten und maximal 5 % SiO_{4/2}-Einheiten, jeweils bezogen auf die Gesamtzahl aller Siloxan-Einheiten pro Molekül, hergestellt werden können.

Bei dem erfindungsgemäßen Verfahren kann nicht nur eine Art von Organopolysiloxan (A), sondern es können auch Gemische aus verschiedenen Arten von Organopolysiloxanen und damit auch von verschiedenen Arten von organopolysiloxanhaltigem Abfall, verwendet werden.

Das erfindungsgemäße Verfahren wird bei einem Druck von vorzugsweise 1000 bis 1500 hPa, insbesondere 1000 bis 1200 hPa, durchgeführt.

Vorzugsweise wird das erfindungsgemäße Verfahren in inerter Atmosphäre, wie beispielsweise unter Stickstoff, durchgeführt.

Bei dem erfindungsgemäßen Verfahren werden alle Komponenten auf beliebige Art und Weise miteinander vermischt und bevorzugt das Gemisch beispielsweise durch Rühren oder Umwälzen bewegt.

Handelt es sich bei dem Organopolysiloxan (A) um hochviskose und/oder elastomere Stoffe, wird erfindungsgemäß vorzugsweise so verfahren, daß dieses in zerkleinerter Form, z.B. gemahlen, unter Rühren einem Gemisch aus Hexamethyldisiloxan, Schwefelsäure und aluminiumhaltigem Silikat zugesetzt wird.

Handelt es sich bei dem Organopolysiloxan (A) um ölartige Stoffe, so wird vorzugsweise das Gemisch aus Schwefelsäure und aluminiumhaltigem Silikat dem Gemisch aus Organopolysiloxan (A) und Hexamethyldisiloxan unter Rühren zugesetzt.

Das erfindungsgemäße Verfahren wird vorzugsweise bei einer Temperatur von 80° bis 140°C, besonders bevorzugt von 90° bis 130°C, durchgeführt.

Nach einer bevorzugten Ausführungsform des erfindungsgemäßen Verfahrens wird das Gemisch aller Komponenten in einem ersten Schritt für eine Dauer von 0,5 bis 2,0 Stunden, bevorzugt 0,5 bis 1,0 Stunden, bei einer Temperatur von 80 bis 120°C, bevorzugt 90 bis 100°C, gerührt und gegebenenfalls anschließend in einer zweiten Stufe für eine Dauer von 0,5 bis 4,0 Stunden, bevorzugt 0,5 bis 2,0 Stunden, bei einer Temperatur von 100 bis 140°C, bevorzugt 120 bis 130°C, gerührt. Der zweite Schritt ist insbesondere dann wichtig, wenn das erfindungsgemäß eingesetzte Organopolysiloxan (A) Si-gebundene Reste R der obengenannten Bedeutung aufweist.

Nach der Umsetzung können die erfindungsgemäß hergestellten Methylpolysiloxane auf unterschiedliche und vielfach bekannte Art und Weise eliminiert werden.

Falls bei dem erfindungsgemäßen Verfahren als Organopolysiloxan (A) füllstofffreie Siloxane eingesetzt werden, wird vorzugsweise nach der Umsetzung die in der Reaktionsmischung enthaltene Schwefelsäure mit Base neutralisiert und filtriert. Die Menge an eingesetzter Base beträgt dabei vorzugsweise 100 bis 200 %, besonders bevorzugt 120 bis 150 %, der zur Neutralisation der Schwefelsäure erforderlichen Menge.

Bei der erfindungsgemäß eingesetzten Base handelt es sich bevorzugt um Alkalicarbonate, Erdalkalicarbonate, Alkalihydrogencarbonate, Erdalkalihydrogencarbonate, Alkalihydroxide, Erdalkalihydroxid, Alkalioxide und Erdalkalioxid, besonders bevorzugt um Calciumcarbonat.

Bei der erfindungsgemäß eingesetzten Base kann es sich um eine Art wie auch um ein Gemisch verschiedener Arten von Base handeln.

Zur Neutralisation wird vorzugsweise für eine Dauer von einer Stunde bei einer Temperatur von 100 bis 140°C, besonders bevorzugt 120 bis 130°C, gerührt.

Das nach der Filtration erhaltene Gemisch aus linearen und cyclischen sowie gegebenenfalls verzweigten Methylpolysiloxanen kann gegebenenfalls, beispielsweise mit Hilfe eines Dünnschichtverdampfers, weiter aufgetrennt werden.

Falls bei dem erfindungsgemäßen Verfahren als Organopolysiloxan (A) füllstoffhaltige Siloxanzusammensetzungen eingesetzt werden, werden vorzugsweise nach der Umsetzung die bereits gebildeten und sich ständig durch Äquilibrierung nachbildenden Methylcyclosiloxane gegebenenfalls im Gemisch mit kurzkettigen linearen Methylpolysiloxanen abdestilliert. Dieser Destillationsschritt wird vorzugsweise bei einem Druck von 5 bis 50 hPa, besonders bevorzugt 10 bis 20 hPa, und einer Temperatur von vorzugsweise 120 bis 180°C durchgeführt, wobei die Temperatur besonders bevorzugt während der Destillation von einem Anfangswert von 120°C kontinuierlich auf einen Endwert von 180°C gesteigert wird.

Das erfindungsgemäße Verfahren kann absatzweise, halb- oder vollkontinuierlich durchgeführt werden.

Das erfindungsgemäße Verfahren hat den Vorteil, daß es einfach in der Durchführung ist und auf organische Lösungsmittel verzichtet werden kann.

Vorteilhafterweise zeichnet sich das Katalysatorsystem Schwefelsäure/aluminiumhaltiges Silikat durch eine hohe und sehr stabile Aktivität aus, was auf eine synergetische Wirkung der beiden Komponenten zurückzuführen ist.

Ein weiterer Vorteil besteht darin, daß das erfindungsgemäße Verfahren ein Recycling von beliebigen Organopolysiloxanen, wie vernetzten oder unvernetzen, füllstoffhaltigen oder füllstofffreien Siloxanen, mit sehr guten Raum-Zeit-Ausbeuten bei relativ niedrigen Temperaturen erlaubt.

Das erfindungsgemäße Verfahren hat noch den Vorteil, daß im eingesetzten Organopolysiloxan (A) enthaltene Si-gebundene Reste R mit der obengenannten Bedeutung effektiv abgespalten werden.

Die erfindungsgemäßen Methylpolysiloxane können für alle Zwecke eingesetzt werden, für die auch bisher Methylpolysiloxane eingesetzt werden können.

In den nachstehend beschriebenen Beispielen beziehen sich alle Angaben von Teilen und Prozentsätzen, falls nicht anders angegeben, auf das Gewicht. Des weiteren beziehen sich alle Viskositätsangaben auf eine Temperatur von 25° C. Sofern nicht anders angegeben, wurden die nachstehenden Beispiele bei einem Druck der umgebenden Atmosphäre, also etwa 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

Im Folgenden werden die Abkürzungen
- V für den Vinylrest,
- P für den Phenylrest und
- M für den Methylrest
verwendet.

### Beispiel 1 (B1)

Dem Gemisch aus 100 Teilen eines Vinylmethyl/Dimethylsiloxycopolymers mit einer Viskosität von 550 mm²/s, welches neben Dimethylsiloxyeinheiten 1,3 Mol-% VM₂SiO_{1/2}-Einheiten und 3,0 Mol-% VMSiO_{2/2}-Einheiten aufweist, und 5 Teilen Hexamethyldisiloxan werden unter Rühren 4 Teile 98 %ige Schwefelsäure und 3 Teile säureaktivierte Bleicherde (chemische Zusammensetzung: SiO₂, Al₂O₃, Fe₂O₃, MgO, CaO, Na₂O und K₂O; pH-Wert der 10%igen wäßrigen Suspension: 3,5; käuflich erhältlich unter der Bezeichnung "Tonsil Optimum FF" bei der Süd-Chemie AG, D-8000 München) zugesetzt. Nach einer Stunde Rühren bei 90°C und anschließend einer Stunde Rühren bei 120°C ist die Endviskosität (Gleichgewichtsviskosität) erreicht. Nach Zusatz von 5 Teilen CaCO₃ wird eine Stunde bei 120°C gerührt und abfiltriert. Das so erhaltene Gemisch aus 80 bis 90 % linearen und verzweigten Methylpolysiloxanen und 10 bis 20 % cyclischen Methylpolysiloxanen, dessen über ²⁹Si-NMR ermittelte Zusammensetzung Tabelle 1 zu entnehmen ist, wird im Dünnschichtverdampfer bei einem Druck von 1 hPa und einer Temperatur von 180°C aufgetrennt.

### Vergleichsbeispiel 1 (V1)

Dem Gemisch aus 100 Teilen des in Beispiel 1 beschriebenen Vinylmethyl/Dimethylsiloxycopolymers und 5 Teilen Hexamethyldisiloxan werden unter Rühren 3 Teile der in Beispiel 1 beschriebenen säureaktivierten Bleicherde zugesetzt. Nach einer Stunde Rühren bei 90°C und anschließend einer Stunde Rühren bei 120°C ist die Endviskosität (Gleichgewichtsviskosität) erreicht. Nach Zusatz von 5 Teilen CaCO₃ wird eine Stunde bei 120°C gerührt und abfiltriert. Die über ²⁹Si-NMR ermittelte Zusammensetzung des so erhaltenen Gemisches verschiedener Methylpolysiloxane ist Tabelle 1 zu entnehmen.

### Vergleichsbeispiel 2 (V2)

Die in Vergleichsbeispiel 1 beschriebene Arbeitsweise wird wiederholt mit der Abänderung, daß anstelle von 3 Teilen säureaktivierter Bleicherde 4 Teile 98 %ige Schwefelsäure zugegeben werden. Die über ²⁹Si-NMR ermittelte Zusammensetzung des so erhaltenen Gemisches verschiedener Methylpolysiloxane ist Tabelle 1 zu entnehmen.

### Vergleichsbeispiel 3 (V3)

Die in Vergleichsbeispiel 2 beschriebene Arbeitsweise wird wiederholt mit der Abänderung, daß anstelle von 4 Teilen 98 %iger Schwefelsäure 0,05 Teile PNCl₂, einem Äquilibrierungskatalysator, der beispielsweise in DE 2229514 A (Wacker-Chemie GmbH; ausgegeben am 3. Januar 1974) bzw. der entsprechenden US 3,839,388 beschrieben ist, zugegeben werden. Die über ²⁹Si-NMR ermittelte Zusammensetzung des so erhaltenen Gemisches verschiedener Methylpolysiloxane ist Tabelle 1 zu entnehmen.

**Tabelle 1**

| | VM₂SiO_{1/2} [%]* | VMSiO [%]* | MSiO_{3/2} [%]* | M₃SiO_{1/2} [%]* | M₂SiO [%]* | Viskosität [mm²/s] |
|---|---|---|---|---|---|---|
| B1 | 0 | 0 | 2,8 | 4,7 | 92,5 | 107 |
| V1 | 0,7 | 1,8 | 1,1 | 4,5 | 92,0 | 41 |
| V2 | 0 | 2,3 | 0,6 | 4,6 | 92,6 | 48 |
| V3 | 1,3 | 3,0 | 0 | 4,4 | 91,3 | 32 |

| | | | | | | |
|---|---|---|---|---|---|---|
| * Bezogen auf die Gesamtzahl aller im Gemisch vorhandenen Siloxangruppen | | | | | | |

### Beispiel 2

1000 g eines gemahlenen Elastomeren, das durch peroxidische Vulkanisation einer Mischung aus Siloxanen, Füllstoff, Vernetzer und üblichen Zusatzstoffen bei 140°C hergestellt wird, mit einem Siloxangehalt von 83 %, bezogen auf das Gewicht des Elastomeren, wobei sich der Siloxananteil der unvulkanisierten Mischung aus 93 % hochpolymerem Dimethylpolysiloxan mit VM₂SiO_{1/2}-Endgruppen, ca. 0,05 Mol-% VMSiO-Gruppen und einer Viskosität von ca. 20·10⁶ mPa·s sowie 7 % α,ω-Dihydroxydimethylpolysiloxan mit einer Viskosität von 40 mPa·s zusammensetzt (käuflich erhältlich unter der Bezeichnung "Elastosil R 101/30 E" bei der Wacker-Chemie GmbH, D-8000 München) werden unter Rühren bei einer Temperatur von 80°C zu einem Gemisch aus 50 g Hexamethyldisiloxan, 25 ml 98 %iger Schwefelsäure und 40 g der in Beispiel 1 beschriebenen säureaktivierten Bleicherde gegeben und die Mischung innerhalb von einer Stunde auf 120°C erhitzt. Es bildet sich eine hochviskose bis pastöse Masse, aus der kontinuierlich unter Rühren bei einem Druck zwischen 10 und 20 hPa die sich bildenden cyclischen und linearen niedermolekularen Methylpolysiloxane abdestilliert werden, wobei die Temperatur während des Destillationsvorgangs innerhalb von 2,0 Stunden auf 180°C erhöht wird. Das mit einer Ausbeute von 86 % (bezogen auf den Siloxangehalt des Elastomeren) erhaltene Destillat besteht zu über 70 % aus Octamethylcyclotetrasiloxan, über 10 % aus Decamethylcyclopentasiloxan sowie Dimethylcyclosiloxanen höheren Polymerisationsgrades und niedermolekularen M₃SiO_{1/2}-endständigen Methylpolysiloxanen. Das erhaltene Destillat hat eine Viskosität von 2,6 mm²/s und hat einen M₃SiO_{1/2}-Gehalt von 4,4 %, bezogen auf die Gesamtzahl aller Siloxaneinheiten.

### Beispiel 3

1000 g eines gemahlenen Elastomeren, das durch Kondensationsvernetzung einer Mischung aus Siloxanen, Füllstoff, Vernetzer und üblichen Zusatzstoffen bei Raumtemperatur hergestellt wird, mit einem Siloxangehalt von 91 %, bezogen auf das Gewicht des Elastomeren, wobei sich der Siloxananteil der unvulkanisierten Mischung aus 70 % α,ω-Dihydroxydimethylpolysiloxan mit einer Viskosität von 80000 mPa·s und 30 % α,ω-Trimethylsiloxydimethylpolysiloxan mit einer Viskosität von 100 mPa·s zusammensetzt (käuflich erhältlich unter der Bezeichnung "RTV-1 E 104" bei der Wacker-Chemie GmbH, D-8000 München) werden unter Rühren bei einer Temperatur von 80°C zu einem Gemisch aus 50 g Hexamethyldisiloxan, 25 ml 98 %iger Schwefelsäure und 40 g der in Beispiel 1 beschriebenen säureaktivierten Bleicherde gegeben und mit der Mischung wie in Beispiel 2 beschrieben verfahren. Das mit einer Ausbeute von 92 % (bezogen auf den Siloxangehalt des Elastomeren) erhaltene Destillat besteht zu über 70 % aus Octamethylcyclotetrasiloxan, über 10 % Decamethylcyclopentasiloxan sowie Dimethylcyclosiloxanen höheren Polymerisationsgrades und niedermolekularen M₃SiO_{1/2}-endständigen Methylpolysiloxanen. Das erhaltene Destillat hat eine Viskosität von 2,6 mm²/s und hat einen M₃SiO_{1/2}-Gehalt von 5,2 %, bezogen auf die Gesamtzahl aller Siloxaneinheiten.

### Beispiel 4

Einem Gemisch aus 100 Teilen eines aus 1,5 Mol-% PM₂SiO_{1/2}-Einheiten, 1,8 Mol-% PMSiO_{2/2}-Einheiten, 2,6 Mol-% PSiO_{3/2}-Einheiten, 1,6 Mol-% M₃SiO_{1/2}-Einheiten und 92,5 Mol-% M₂SiO_{2/2}-Einheiten bestehenden Siloxans mit einer Viskosität von 520 mPa·s und 15 Teilen Hexamethyldisiloxan werden unter Rühren 4 Teile 98 %ige Schwefelsäure und 3 Teile der in Beispiel 1 beschriebenen säureaktivierten Bleicherde zugesetzt. Nach einer Stunde Rühren bei 90°C und anschließend einer Stunde Rühren bei 120°C ist die Endviskosität (Gleichgewichtsviskosität) erreicht. Nach Zusatz von 5 Teilen CaCO₃ wird eine Stunde bei 120°C gerührt und abfiltriert. Das so erhaltene Gemisch enthält 80 bis 90 % lineare und verzweigte Methylpolysiloxane, 10 bis 20 % cyclische Methylpolysiloxane sowie bei der Umsetzung gebildetes Benzol und hat eine Viskosität von 150 mPa·s. Die erhaltenen Methylpolysiloxane sind laut ²⁹Si-NMR frei von Si-gebundenen Phenylresten und setzen sich aus M₃SiO_{1/2}-, M₂SiO_{2/2}-, MSiO_{3/2}- und SiO_{4/2}-Einheiten zusammen. Die niedermolekularen, überwiegend cyclischen Methylpolysiloxane und das Benzol werden im Dünnschichtverdampfer bei einem Druck von 5 hPa und einer Temperatur von 150°C entfernt.

## Patentansprüche

1. Verfahren zur Herstellung von Methylpolysiloxanen durch Umsetzung von Organopolysiloxanen (A) aus Einheiten der Formel
Rₐ(CH₃)_{b}(R¹O)_{c}SiO_{(4-a-b-c)/2} (I),
worin
R gleich oder verschieden sein kann und Wasserstoffatom, gegebenenfalls substituierte aromatische Kohlenwasserstoffreste oder gegebenenfalls substituierte aliphatisch ungesättigte Reste bedeutet,
R¹ Wasserstoffatom oder Alkylrest bedeutet,
a 0, 1, 2 oder 3, bevorzugt 0, 1 oder 2, insbesondere 0 oder 1,
b 0, 1, 2 oder 3, bevorzugt 1, 2 oder 3, insbesondere 2, und
c 0 oder 1, bevorzugt 0, ist,
mit der Maßgabe, daß die Summe a+b+c kleiner oder gleich 3 ist,
mit Hexamethyldisiloxan in Anwesenheit von konzentrierter Schwefelsäure und aluminiumhaltigem Silikat.

2. Verfahren nach Anspruch 1, dadurch gekennzeichnet, daß R Wasserstoffatom, Vinyl- oder Phenylreste bedeutet.

3. Verfahren nach Anspruch 1 oder 2, dadurch gekennzeichnet, daß es sich bei dem aluminiumhaltigen Silikat um Bleicherden handelt.

4. Verfahren nach einem der Ansprüche 1 bis 3, dadurch gekennzeichnet, daß aluminiumhaltiges Silikat in Mengen bis 10 Gewichtsprozent, bezogen auf das Gesamtgewicht an Organopolysiloxan (A), eingesetzt wird.

5. Verfahren nach einem der Ansprüche 1 bis 4, dadurch gekennzeichnet, daß konzentrierte Schwefelsäure in Mengen bis 10 Gewichtsprozent, bezogen auf das Gesamtgewicht an Organopolysiloxan (A), eingesetzt wird.

6. Verfahren nach einem der Ansprüche 1 bis 5, dadurch gekennzeichnet, daß als Organopolysiloxan (A) füllstofffreie Siloxane eingesetzt werden.

7. Verfahren nach Anspruch 6, dadurch gekennzeichnet, daß nach der Umsetzung die in der Reaktionsmischung enthaltene Schwefelsäure mit Base neutralisiert wird.

8. Verfahren nach einem der Ansprüche 1 bis 5, dadurch gekennzeichnet, daß als Organopolysiloxan (A) füllstoffhaltige Siloxanzusammensetzungen eingesetzt werden.

9. Verfahren nach Anspruch 8, dadurch gekennzeichnet, daß nach der Umsetzung die gebildeten und sich ständig durch Äquilibrierung nachbildenden Methylcyclosiloxane gegebenenfalls im Gemisch mit kurzkettigen linearen Methylpolysiloxanen abdestilliert werden.

10. Verfahren nach einem der Ansprüche 1 bis 9, dadurch gekennzeichnet, daß es bei einem Druck von 1000 bis 1500 hPa durchgeführt wird.
